# EUROPÄISCHE PATENTANMELDUNG

(11) **EP 2 662 005 A2**
(43) Veröffentlichungstag der Anmeldung: **13.11.2013**
(21) Anmeldenummer: 13002435.9
(22) Anmeldetag: 07.05.2013
(51) Int. Cl.: A47J 37/07

(54) **Grill, insbesondere Einweggrill**

(30) Priorität: 07.05.2012 DE 202012004383 U; 12.03.2013 DE 202013002340 U
(71) Anmelder: Landmann Holding GmbH & Co. KG, 27711 Osterholz-Scharmbeck (DE)
(72) Erfinder: Rosebrock, Thorsten, 27628 Hagen (DE)
(74) Vertreter: Möller, Friedrich

(57) **Zusammenfassung**

Zunehmend wird auf öffentlichen Flächen mit mitgebrachten Grills, insbesondere Einweggrills, gegrillt. Diese Grills bestehen aus Materialien, die entsorgt werden müssen, was vielfach unterlassen wird.

Bei der Erfindung geht es um Grills, insbesondere Einweggrills, bei denen mindestens eine Feuerwanne (11) aus pflanzlichen Bestandteilen, natürlichen hitzebeständigen Füllstoffen und/oder Bindemitteln besteht. Wenn es unterlassen wird, solche Grills nach Gebrauch zu entsorgen, verrotten sie. Werden solche Grills entsorgt, können sie in den Biomüll gelangen oder kompostiert werden.

## Beschreibung

Die Erfindung betrifft einen Grill, insbesondere Einweggrill, gemäß dem Oberbegriff des Anspruchs 1, 4 bzw. 6.

Zunehmend wird auf öffentlichen Flächen, insbesondere in Parks gegrillt unter Verwendung mitgebrachter Grills und ohne Nutzung festinstallierter Grillstellen. Die mitgebrachten Grills sind häufig preisgünstige Grills, die nach Gebrauch stehen gelassen werden oder ohnehin Einweggrills. Der dabei anfallende Müll enthält häufig Verpackungsbestandteile aus Kunststoff und/oder durch den Gebrauch stark verschmutzte Metallteile. Die Entsorgung ist aufwendig.

Aufgabe der vorliegenden ist die Schaffung eines Grills, dessen Entsorgung leichter und unproblematischer ist als bei den bekannten Grills, insbesondere bei den üblichen Einweggrills.

Zur Lösung der Aufgabe weist der erfindungsgemäße Grill die Merkmale des Anspruchs 1 auf. Danach ist vorgesehen, dass der Werkstoff der Feuerwanne pflanzliche Bestandteile sowie natürliche hitzebeständige Füllstoffe und/oder Bindemittel enthält. Die pflanzlichen Bestandteile sind ohnehin als solche kompostierbar. Die Angabe natürlicher Füllstoffe und/oder Bindemittel bedeutet vorzugsweise, dass die Feuerwanne nach Gebrauch verrottbar oder biologisch abbaubar ist oder in den Biomüll gegeben werden kann oder kompostierbar ist. Die pflanzlichen Bestandteile bilden insbesondere eine Matrix für die Füllstoffe. Die Festigkeit ergibt sich in Kombination mit dem Bindemittel. Natürlich kann das Bindemittel zugleich Füllstoff sein und umgekehrt. Die einzelnen Bestandteile sind so ausgewählt, dass die Feuerwanne vorzugsweise fettdicht ist.

Vorteilhafterweise sind als pflanzliche Bestandteile zumindest oder ausschließlich pflanzliche Fasern vorgesehen. Durch Auswahl geeigneter Fasern, deren Dicke und Länge und deren Gesamtanteil ist eine hohe Stabilität der Feuerwanne erzielbar.

Als Füllstoffe und/oder Bindemittel können anorganische Substanzen vorgesehen sein. Vorzugsweise handelt es sich um gut hitzebeständige Substanzen, da Temperaturen von bis zu 400°C auftreten. Insbesondere sind Mineralien, Steinmehl oder erdige Bestandteile als Füllstoffe vorgesehen. Vorzugsweise handelt es sich nicht um metallische Füllstoffe. Mit Metallen gebildete Mineralien sind in diesem Sinne keine metallischen Füllstoffe. Angestrebt ist eine deutlich geringere Wärmeleitung als bei einer metallischen Feuerwanne, beispielsweise eine Wärmeleitung, die nur ein Fünftel oder ein Zehntel oder noch weniger im Verhältnis zu einer Feuerwanne aus Aluminiumfolie beträgt.

Nach einem weiteren Gedanken der Erfindung sind die Bestandteile des Werkstoffs der Feuerwanne miteinander verpresst. Dies kann unter hohem Druck für eine innige Verbindung und Hitzebeständigkeit erfolgt sein. Möglich ist auch eine Erwärmung der Bestandteile beim Verpressen, auch bis hin zu einem Sinterprozess.

Der Grill wird üblicherweise mit Briketts beheizt. Diese liegen in der Feuerwanne und glühen. Der Grill soll aber nicht zwingend auf die Verwendung von Briketts beschränkt sein. Auch andere Brennstoffe können verwendet werden in Abhängigkeit von den erreichten Temperaturen und der Hitzebeständigkeit der Einzelteile des Grills.

Ein anderer Grill zur Lösung der Aufgabe, wobei es sich auch um eine vorteilhafte Weiterbildung des zuvor beschriebenen Grills handeln kann, weist die Merkmale des Anspruchs 4 auf. Bei diesem Grill mit Feuerwanne ist ein Rost aus Metall oder aus hitzebeständigem, natürlichen Werkstoff vorgesehen. Bevorzugt ist wiederum ein Werkstoff, der als Biomüll entsorgt werden kann oder kompostierbar ist oder zumindest ohne Beeinträchtigung des Grundwassers deponierbar ist. Der Rost weist vorzugsweise zwei Längsträger und dazwischen angeordnete Querstäbe auf. Möglich ist aber auch ein Rost mit einander schneidenden oder kreuzenden Teilen oder ein plattenartiger Rost mit mehr oder weniger regelmäßig angeordneten Ausnehmungen.

Vorteilhafterweise ist der Rost aus hitzebeständigem Hartholz und/oder anorganischem Material hergestellt. Bei dem anorganischen Material kann es sich beispielsweise um ein Material ähnlich dem Füllstoff und/oder dem Bindemittel für die Feuerwanne handeln, also insbesondere Mineralien, Steinmehl oder dergleichen. Möglich ist auch eine Kombination aus Hartholz und anorganischem Material, zum Beispiel als Beschichtung. Das Hartholz kann dann etwas weicher und weniger hitzebeständig sein als in einer Ausführung ohne Beschichtung.

Nach einem weiteren Gedanken der Erfindung kann der Rost insbesondere lösbar mit der Feuerwanne verbunden sein. Vorzugsweise liegt der Rost auf der Feuerwanne auf und ist mit Haken, Stiften, Nägeln, Klammern oder dergleichen gesichert, so dass ein am Rost haftendes Grillfleisch beim Abnehmen den Rost nicht anhebt. Die Verbindung zwischen Rost und Feuerwanne kann auch durch miteinander korrespondierende Vorsprünge und Hinterschneidungen am Rost bzw. einer Feuerwanne gebildet sein.

Ein anderer Grill zur eigenständigen Lösung der Aufgabe, aber gegebenenfalls auch zur vorteilhaften Weiterbildung des zuvor beschriebenen Grills weist die Merkmale des Anspruchs 6 auf. Dieser Grill weist eine Feuerwanne ein Bodenteil auf, wobei sich die Feuerwanne auf dem Bodenteil abstützt. Das Bodenteil schirmt die Hitze der Feuerwanne gegen den Untergrund ab. Dadurch werden Brandflecken auf Rasenflächen vermieden. Insbesondere ist das Bodenteil unterhalb der Feuerwanne vollflächig ausgebildet.

Vorteilhafterweise ist ein Boden der Feuerwanne mit Abstand zur tiefsten Wandung des Bodenteils gehalten. Die tiefste Wandung des Bodenteils kann auch als Boden des Bodenteils bezeichnet werden.

Vorteilhafterweise ist das Bodenteil aus zellulosehaltigem Werkstoff, insbesondere aus Pappe hergestellt. Je nach verwendeten Bestandteilen kann auch diese verrottbar oder biologisch abbaubar und insbesondere kompostierbar sein, als Biomüll oder zumindest als Altpapier entsorgt werden.

Besonders vorteilhaft ist eine Ausführung, bei der das Bodenteil Stützmittel für die Feuerwanne aufweist. Die Feuerwanne liegt nur auf den Stützmitteln auf. Diese sind vorzugsweise einem Außenrand der Feuerwanne zugeordnet und bewirken, dass der Boden der Feuerwanne mit deutlichem Abstand zum Boden des Bodenteils oder zum Untergrund liegt. Alternativ oder zusätzlich kann die Feuerwanne Stützmittel aufweisen. Im Rahmen der Erfindung kann auch vorgesehen sein, dass die Stützmittel durch Faltung aus Wandungen des Bodenteils gebildet sind. Das Bodenteil kann aufrechte umlaufende Wände aufweisen und beispielsweise mit einem rechteckigen Boden versehen sein. Je aufrechter Wand des Bodenteils ist vorzugsweise ein Stützmittel vorgesehen. Es können aber auch zwei oder mehr Stützmittel je aufrechter Wand vorhanden sein. Bevorzugt ist eine Ausführung mit mindestens drei oder vier Stützmitteln insgesamt.

Nach einem weiteren Gedanken der Erfindung ist das Bodenteil zugleich Deckel für die Feuerwanne. Beim Transport des Grills, insbesondere vor der ersten Benutzung, nimmt die Feuerwanne den Brennstoff auf und ist durch den Deckel abgedeckt. In der Feuerwanne kann auch ein zerlegter Rost angeordnet sein. Der Deckel kann auf der Feuerwanne durch eine umlaufende Banderole gesichert sein. Auch die Banderole ist vorzugsweise aus einem natürlichen Werkstoff im Sinne der voranstehenden Ausführungen hergestellt.

Nach einem weiteren Gedanken der Erfindung kann der Werkstoff des Bodenteils pflanzliche Bestandteile sowie natürliche hitzebeständige Füllstoffe und/oder Bindemittel enthalten. Insbesondere ist das Bodenteil insgesamt hitzebeständig. Dabei sind die Anforderungen nicht ganz so hoch wie an die Feuerwanne, abgesehen von Anlageflächen des Bodenteils, die unmittelbar am Boden der Feuerwanne anliegen. Grundsätzlich weist der Werkstoff des Bodenteils die gleichen Eigenschaften auf wie der Werkstoff der Feuerwanne. Vorzugsweise handelt es sich sogar um denselben Werkstoff. Bevorzugt ist ein Werkstoff, aus dem durch mechanischen Druck bzw. Pressen eine definierte Formgebung erzielbar ist.

Erfindungsgemäß kann das Bodenteil eine Hauptwand aufweisen, welche etwa parallel zur Ebene eines Rostes und zu einer Bodenwand der Feuerwanne verläuft. Dabei sind in der Hauptwand Vertiefungen und/oder Erhöhungen gebildet, insbesondere derart, dass das Bodenteil im Bereich der Vertiefungen und/oder Erhöhungen etwa die gleiche Wandstärke aufweist wie im Bereich der Hauptwand im Übrigen. Das Bodenteil ist im Verhältnis zur Feuerwanne vorzugsweise ein eigenes, separates Teil ohne dauerhafte Verbindung zur Feuerwanne. Die Feuerwanne liegt auf dem Bodenteil auf. Dabei kann das Bodenteil in zwei unterschiedlichen Positionen unter der Feuerwanne liegen, nämlich mit der an der Feuerwanne anliegenden Hauptwand und abwärts gerichteten Vertiefungen oder mit aufwärts gerichteten Erhöhungen und einem entsprechenden Abstand zwischen der Bodenwand der Feuerwanne und der Hauptwand des Bodenteils. Insofern sind die Begriffe Vertiefungen einerseits und Erhöhungen andererseits gleichbedeutend und beziehen sich nur auf die jeweilige Lage des Bodenteils. Zur Vereinfachung wird nachfolgend davon ausgegangen, dass die Hauptwand des Bodenteils als unterste Wandung zur Auflage auf dem Erdboden vorgesehen ist und die Hauptwand Erhöhungen aufweist. Vorzugsweise sind die Erhöhungen durch mechanischen Druck in die Hauptwand eingepresst bzw. aus dieser herausgepresst und demnach nicht massiv.

Nach einem weiteren Gedanken der Erfindung ist vorgesehen, dass die Erhöhungen und/oder Vertiefungen als streifen- oder barrenartige Bereiche in der Hauptwand ausgebildet sind, insbesondere als einander kreuzende Bereiche. Dies erhöht die Steifigkeit und Stabilität des Bodenteils insgesamt.

Vorzugsweise sind Erhöhungen und/oder Vertiefungen als säulen- oder topfartige Bereiche in der Hauptwand ausgebildet, insbesondere nahe einem Rand der Hauptwand umlaufend und mit Abstand zueinander, vorzugsweise in Kreuzungsbereichen von streifen- oder barrenartigen Bereichen. Die säulen- oder topfartigen Bereiche sind insbesondere konisch, mit abgeflachter Oberseite ausgebildet und etwas höher als die Streifen oder Barren. Die Feuerwanne kommt mit ihrer Bodenwand auf den säulen- oder topfartigen Bereichen zu liegen. Letztere sind vorzugsweise durch mechanischen Druck in die Hauptwand eingepresst bzw. aus dieser herausgepresst, also nicht massiv.

Erfindungsgemäß können die Feuerwanne und/oder ein Bodenteil einen ganz oder teilweise umlaufenden Rand aufweisen, insbesondere einen in einer im Wesentlichen waagerechten Ebene nach außen abstehenden Rand. Der Rand kann zusätzliche Funktionen übernehmen, nämlich die Stabilität erhöhen, als Auflage dienen, als Widerlager oder als Verbindungsmittel.

Nach einem weiteren Gedanken der Erfindung können der Rost und die Feuerwanne Mittel zur mindestens in einer Richtung wirksamen, formschlüssigen Verbindung aufweisen, insbesondere randseitige Verbindungsmittel am Rost, welche Ränder der Feuerwanne umgreifen. Dies betrifft insbesondere einander gegenüberliegende Ränder der Feuerwanne, zum Beispiel bei einer rechteckigen Feuerwanne mit Längsrändern und Querrändern die einander gegenüberliegenden Längsränder. Der Rost kann in einer Richtung auf die Längsränder aufgeschoben werden. Dabei umgreifen die randseitigen Verbindungsmittel die Längsränder. Der aufgeschobene Rost ist quer zur Aufschieberichtung anschließend nicht von der Feuerwanne abhebbar. Der Formschluss wirkt sich entsprechend in dieser Richtung quer zur Aufschieberichtung aus.

Weitere Merkmale der Erfindung ergeben sich aus der Beschreibung im Übrigen und aus den Ansprüchen. Vorteilhafte Ausführungsformen der Erfindung werden nachfolgend anhand der Zeichnungen näher erläutert. Es zeigen:
- Fig. 1: eine erste Ausführung eines Einweggrills in perspektivischer Darstellung,
- Fig. 2: eine Feuerwanne des Einweggrills in perspektivischer Darstellung,
- Fig. 3: ein Bodenteil des Einweggrills in perspektivischer Darstellung und mit ausgeklappten Stützmitteln für die Feuerwanne,
- Fig. 4: das Bodenteil gemäß Figur 3, jedoch mit eingefalteten Stützmitteln,
- Fig. 5: den Einweggrill gemäß Figur 1 in Seitenansicht,

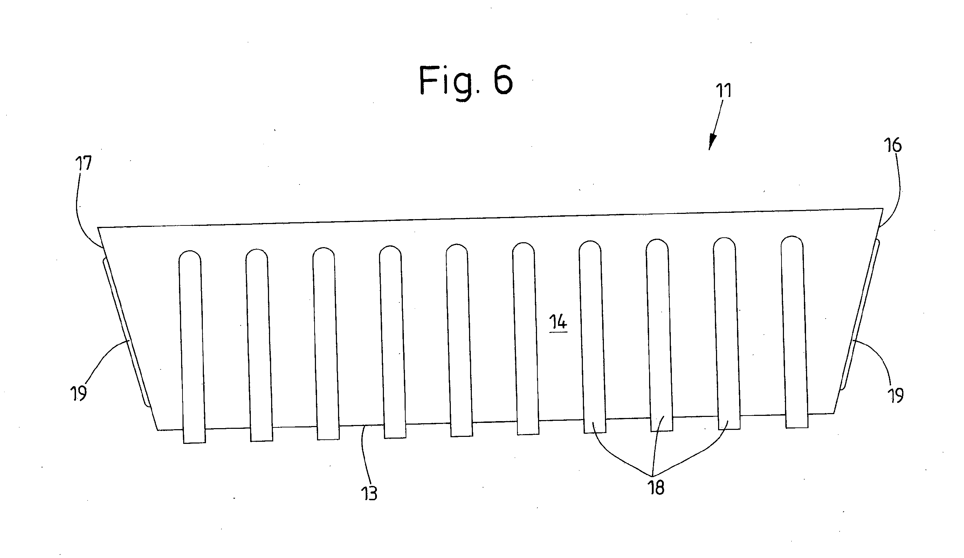

- Fig. 6: die Feuerwanne in Seitenansicht,

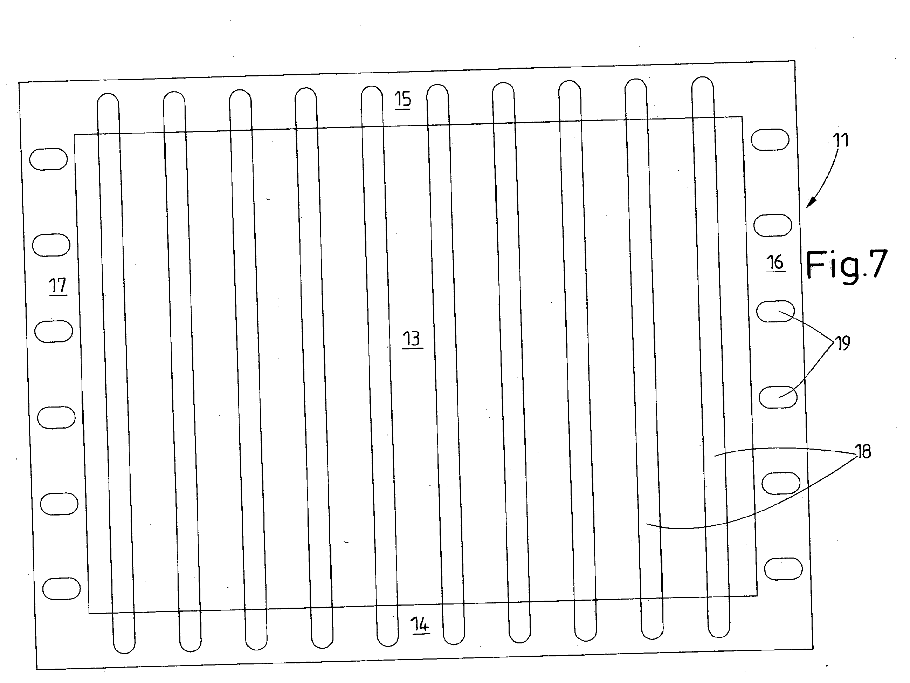

- Fig. 7: eine Unteransicht der Feuerwanne,
- Fig. 8: einen Zuschnitt für das Bodenteil der Feuerwanne,
- Fig. 9a: eine zweite Ausführung eines Grills mit Feuerwanne, Bodenteil und Rost, in einer Transport-Zusammenstellung,
- Fig. 9b: Feuerwanne und Bodenteil in Transport-Zusammenstellung,
- Fig. 9c: Feuerwanne allein,
- Fig. 9d: Bodenteil allein mit obenliegender Unterseite,
- Fig. 9e: Bodenteil allein, in vorgesehener Ausrichtung,
- Fig. 9f: Bodenteil mit aufliegender Feuerwanne,
- Fig. 9g: Bodenteil mit aufliegender Feuerwanne und aufliegendem Rost.

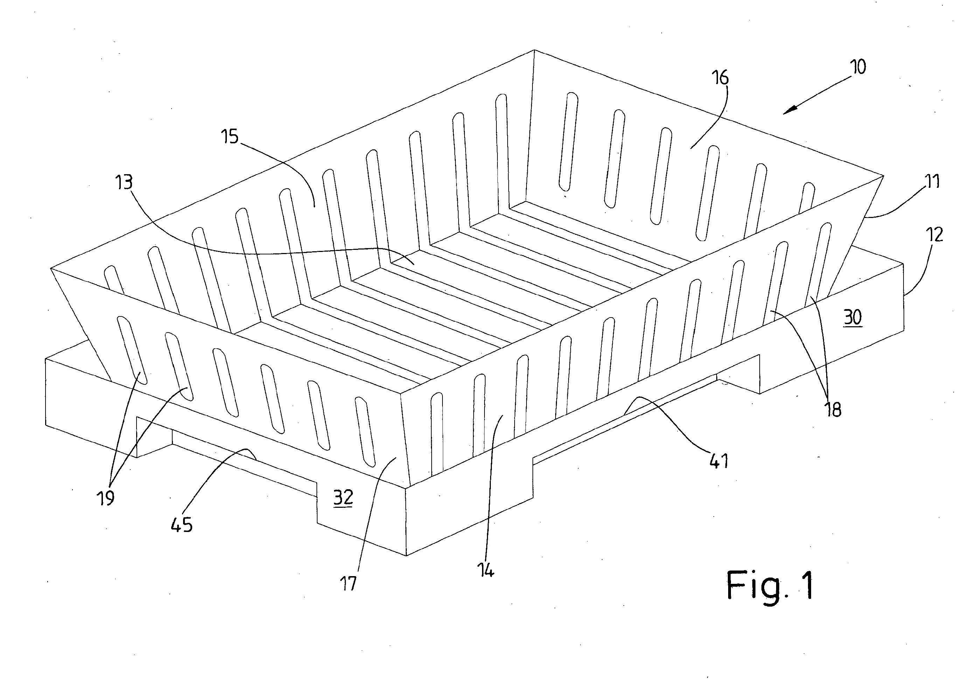

Gemäß Figur 1 weist ein Einweggrill 10 eine Feuerwanne 11 zur Aufnahme eines nicht gezeigten Brenngutes und ein Bodenteil 12 auf, in dem die Feuerwanne steht. Auf der Feuerwanne 11 liegt in nicht gezeigter Weise ein Grillrost.

Die Feuerwanne 11 ist im Wesentlichen rechteckig mit Bodenwand 13, Seitenwänden 14, 15 und Stirnwänden 16, 17. Die Feuerwanne 11 ist nach oben offen mit nach oben zunehmendem Öffnungsquerschnitt. Entsprechend sind die Wände 14 bis 17 leicht schräg gerichtet. Die Bodenwand 13 ist hier eben bzw. plan ausgebildet. Die Feuerwanne 11 besteht aus pflanzlichen Bestandteilen, welche mit natürlichen, hitzebeständigen Füllstoffen und/oder Bindemitteln verpresst sind. In die Wände 13 bis 17 sind Sicken 18 zur Verstärkung eingepresst. Diese verlaufen parallel zueinander von der Seitenwand 14 über die Bodenwand 13 zur Seitenwand 15. Die Stirnwände 16, 17 weisen eigene kurze Sicken 19 auf.

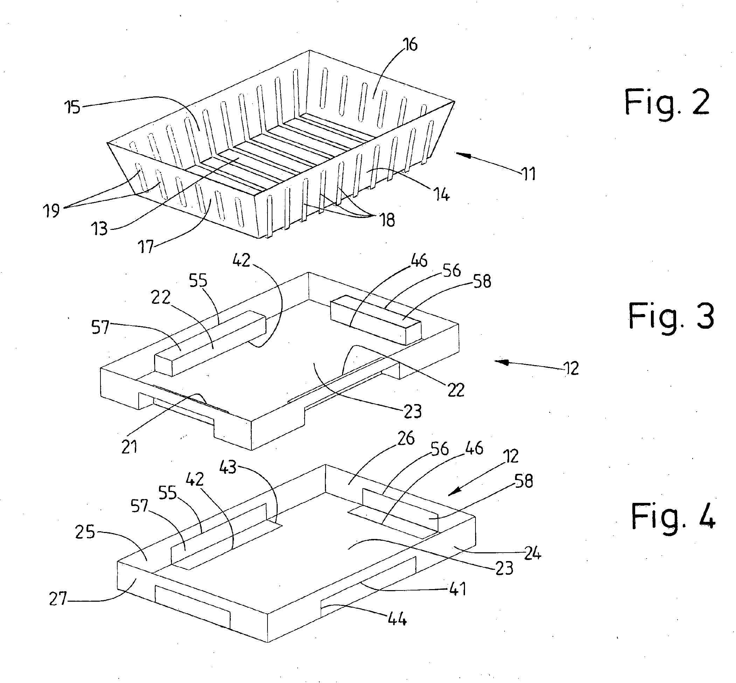

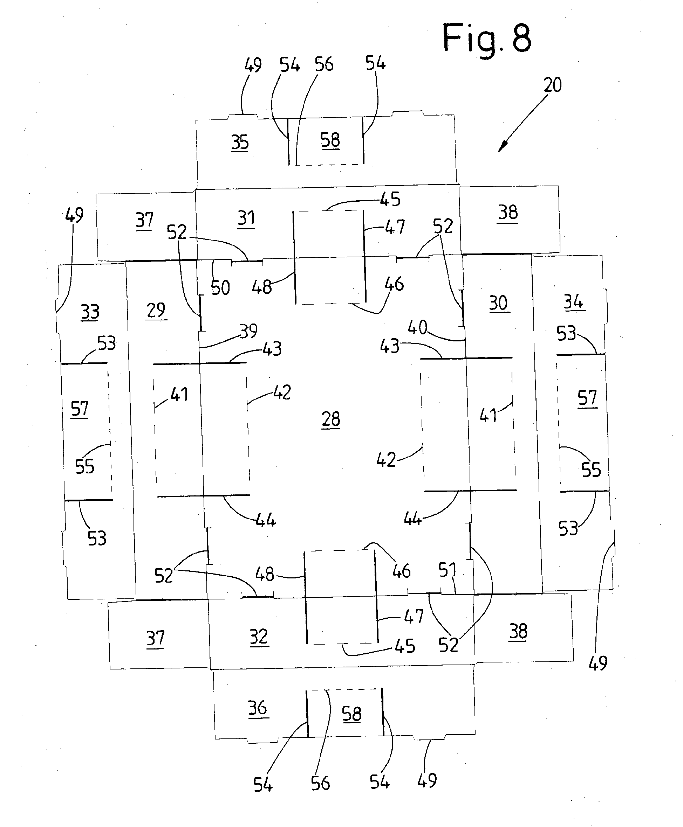

Das Bodenteil 12 ist durch Faltung aus einem Zuschnitt 20 (Figur 8) aus Pappe gebildet. Die Figuren 3 und 4 zeigen zwei verschiedene Stadien bei der Faltung des Zuschnitts 20. Figur 3 zeigt das fertig gefaltete Bodenteil 12 mit ausgeklappten oder ausgefalteten Stützmitteln 21, 22, während in Figur 4 die Stützmittel 21, 22 noch nicht ausgefaltet sind.

Das Bodenteil 12 ist im Wesentlichen rechteckig ausgebildet mit Unterwand 23, Seitenwänden 24, 25 und Stirnwänden 26, 27. Die Wände 24 bis 27 verlaufen vorzugsweise nicht schräg sondern aufrecht. Die Stützmittel 21, 22 sind durch Teile der Wände 24 bis 27 einerseits und angrenzende Teile der Unterwand 23 andererseits gebildet bzw. ausgefaltet.

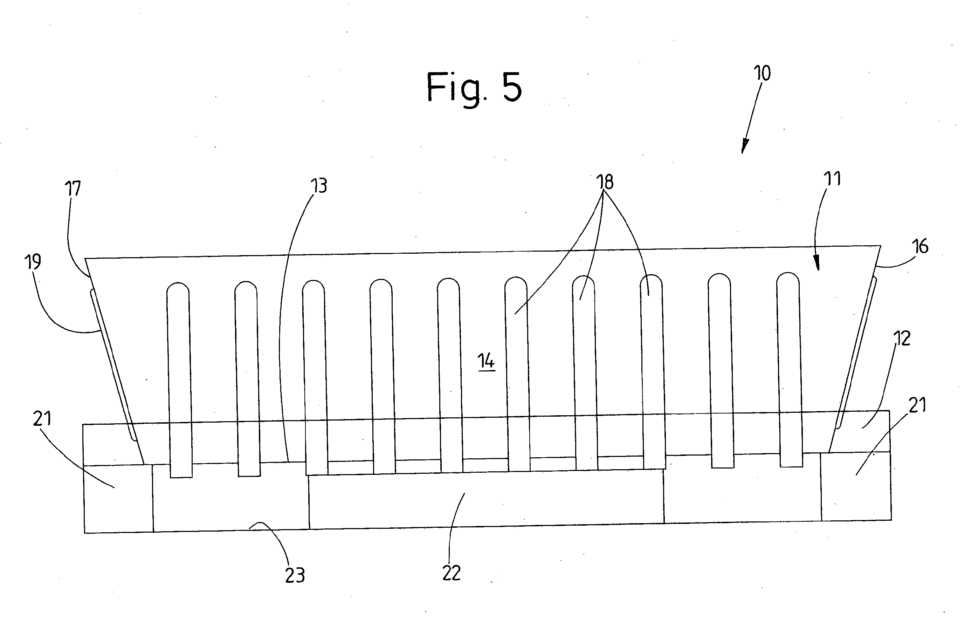

Die Größe der Unterwand 23 und somit die Abstände der Stützmittel 21, 22 zueinander sind so bestimmt, dass die Feuerwanne 11 mit ihrer Bodenwand 13 sicher auf den Stützmitteln 21, 22 aufliegen kann, ohne dass dabei die Wände 14 bis 17 der Feuerwanne 11 die Wände 24 bis 27 des Bodenteils 12 berühren, siehe Figuren 1 und 5. Außerdem ist das Bodenteil 12 so bemessen, dass es über die offene Feuerwanne 11 als Deckel gestülpt werden kann, siehe dargestellte Proportionen in Figur 5.

Die Sicken 18, 19 heben sich nach außen von den Wänden 13 bis 17 ab. Je nach Anordnung der Sicken kann dies dazu führen, dass die stirnseitigen Stützmittel 21 an der Bodenwand 13 außerhalb von Sicken anliegen, während die Stützmittel 22 an Sicken anliegen und demzufolge etwas niedriger als die Stützmittel 21 ausgebildet sein können, siehe Figur 5.

Figur 8 zeigt die Aufteilung des Zuschnitts 20 aus Pappe oder aus einem anderen verrottbaren oder kompostierbaren Material. Die einzelnen Zuschnittbestandteile werden nachfolgend als "Elemente" mit entsprechenden Zusätzen bezeichnet. Mittig ist ein rechteckiges Bodenelement 28 vorgesehen, an das seitlich Seitenelemente 29, 30 und Stirnelemente 31, 32 anschließen, jeweils rechteckig ausgebildet. Außenseitig schließen an die Seitenelemente 29, 30 jeweils Seitenfaltelemente 33, 34 an, welche etwa gleich groß sind wie die Seitenelemente 29, 30. Analog dazu schließen an die Stirnelemente 31, 32 Stirnfaltelemente 35, 36 an, ebenfalls etwa so groß wie die rechteckigen Stirnelemente 31, 32. In Längsrichtung der Stirnelemente 31, 32 schließen an diese beidseitig Lappenelemente 37, 38 an.

Zur Ausbildung der Stützmittel 22 ist im Bereich von Faltlinien 39, 40 zwischen Seitenelementen 29, 30 und Bodenelement 28 etwa mittig jeweils ein rechteckiger Bereich mit zwei Faltlinien 41, 42 und hierzu quergerichteten Schnitten 43, 44 vorgesehen. Letzere erstrecken sich quer zu den Faltlinien 39, 40, während die Faltlinien 41, 42 parallel dazu verlaufen. Nach dem Hochfalten der Seitenelemente 29, 30 werden die durch die Linien 41, 42 und Schnitte 43, 44 definierten Rechtecke einwärts gedrückt und bilden so eine Stufe am seitlichen Rand der Unterwand 23 aus, nämlich die Stützmittel 22, vgl. auch Figuren 4 und 3.

In analoger Weise sind im Bereich der Übergange zwischen dem Bodenelement 28 und den angrenzenden Stirnelementen 31, 32 rechteckige Felder durch Faltlinien 45, 46 und Schnitte 47, 48 gebildet. Aus diesen Bereichen entstehen beim Falten des Zuschnitts 20 die Stützmittel 21.

Vorzugsweise werden beim Falten des Bodenteils 12 die Stirnelemente 31, 32 zuerst aufgerichtet und danach die Seitenelemente 29, 30, so dass die Lappenelemente 37, 38 innenseitig der Seitenelemente 29, 30 zu liegen kommen. Anschließend werden die Seitenfaltelemente 33, 34 und die Stirnfaltelemente 35, 36 einwärts gefaltet und mit randseitigen Vorsprüngen 49 entlang der Faltlinien 39, 40 und entlang von Faltlinien 50, 51 in entsprechend vorgesehenen Schnitten 52 verhakt. Je Faltlinie 39, 40 und 50, 51 sind hier zwei Schnitte 52 vorgesehen. Entsprechend weisen die Seitenfaltelemente 33, 34 und Stirnfaltelemente 35, 36 jeweils zwei Vorsprünge 49 randseitig auf.

Beim Einwärtsfalten der Seitenfaltelemente 33, 34 und Stirnfaltelemente 35, 36 kommen diese auf den durch Ausklappen gebildeten Stützmitteln zu liegen. Um gleichwohl innenseitig an die Seitenelemente 29, 30 und Stirnelemente 31, 32 anlegbar zu sein, weisen die Faltelemente 33 bis 36 vom Rand ausgehende Einschnitte 53, 54 bis zu einer Faltlinie 55, 56 auf und definieren dadurch aufwärts klappbare Randelemente 57, 58. Letzere bilden im fertig gefalteten Bodenteil 12 Oberseiten der Stützmittel 21, 22. Entsprechend sind die Stützmittel 21, 22 nach oben hin zweilagig ausgebildet.

Der nicht gezeigte Rost kann im vorliegenden Fall steckbar vorgesehen sein, etwa aus zwei seitlichen Längsträgern mit diese verbindenden Querstäben. Die Abmessung des Rosts ist vorzugweise so gewählt, dass dieser auf oberen Rändern der Feuerwanne aufliegt. Entsprechend liegen die Längsträger außerhalb der Feuerwanne. Alternativ kann eine Abmessung gewählt sein, so dass der Rost in der konischen Form der Feuerwanne innen anliegt, nahe dem oberen Rand derselben. Schließlich kann der Rost auch flächenhaft mit Bohrungen oder anderen Ausnehmungen gebildet sein und oben auf der Feuerwanne 11 aufliegen.

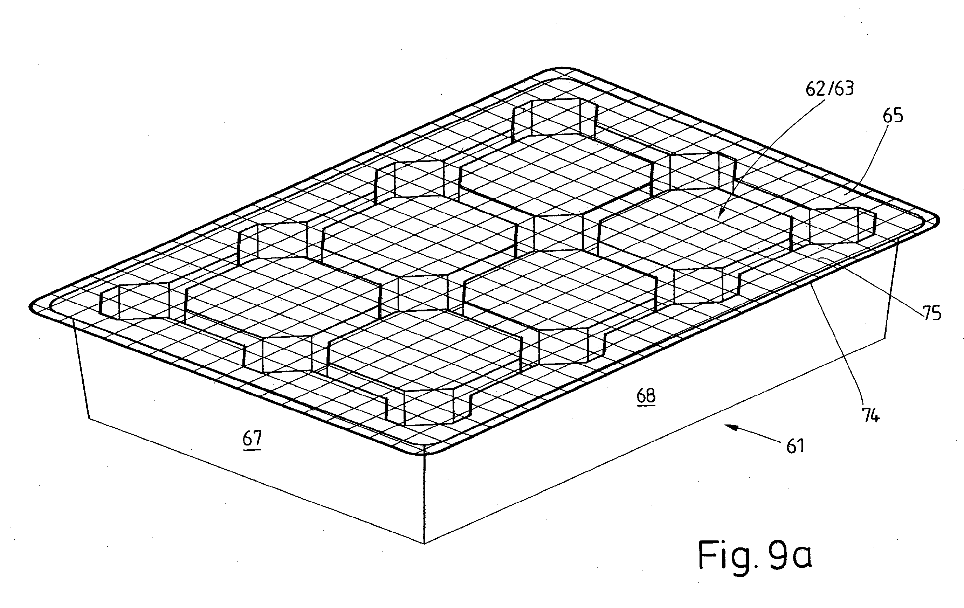

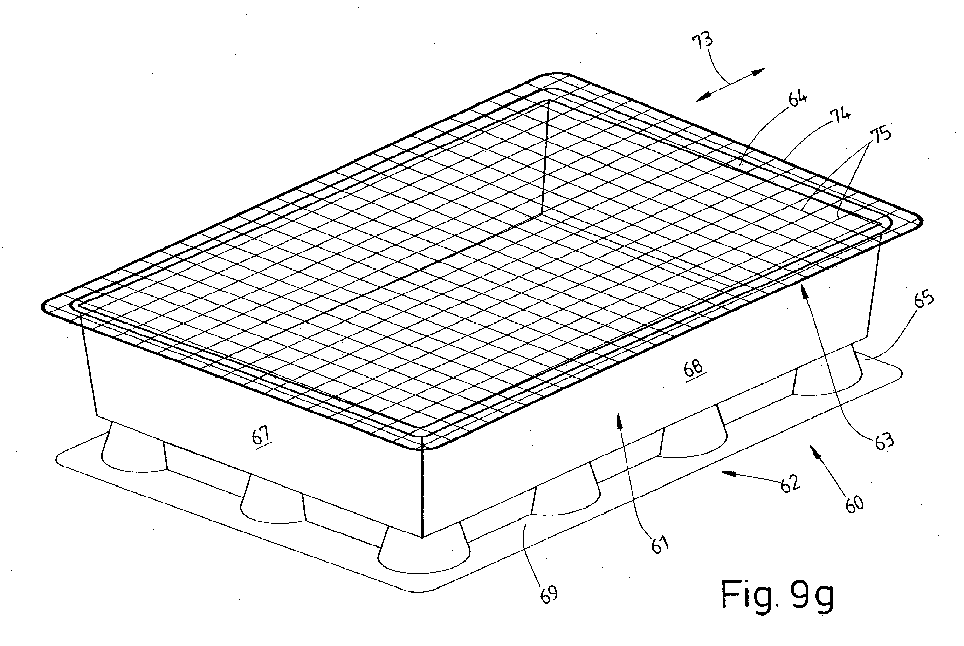

In der Ausführungsform der Fig. 9a bis 9g sind ein Grill 60 oder Teile eines Grills 60 gezeigt, der vorzugsweise als Einweggrill vorgesehen ist und der im Wesentlichen aus drei Teilen besteht, nämlich einer Feuerwanne 61, einem Bodenteil 62 und einem Rost 63. Fig. 9g zeigt den fertig aufgebauten, zur Benutzung vorgesehenen Grill 60 mit allen Bestandteilen (ohne Brennstoff).

Die Bestandteile des Grills 60 sind gemäß Fig. 9a für den Transport in einer nicht gezeigten Umverpackung raumsparender zusammengestellt, als in der Darstellung gemäß Fig. 9g. Die Abfolge der Fig. 9a bis 9g zeigt die Wandlung des Grills 60 vom Transportzustand in den zur Benutzung vorgesehenen Zustand sowie die Bestandteile in Einzeldarstellung.

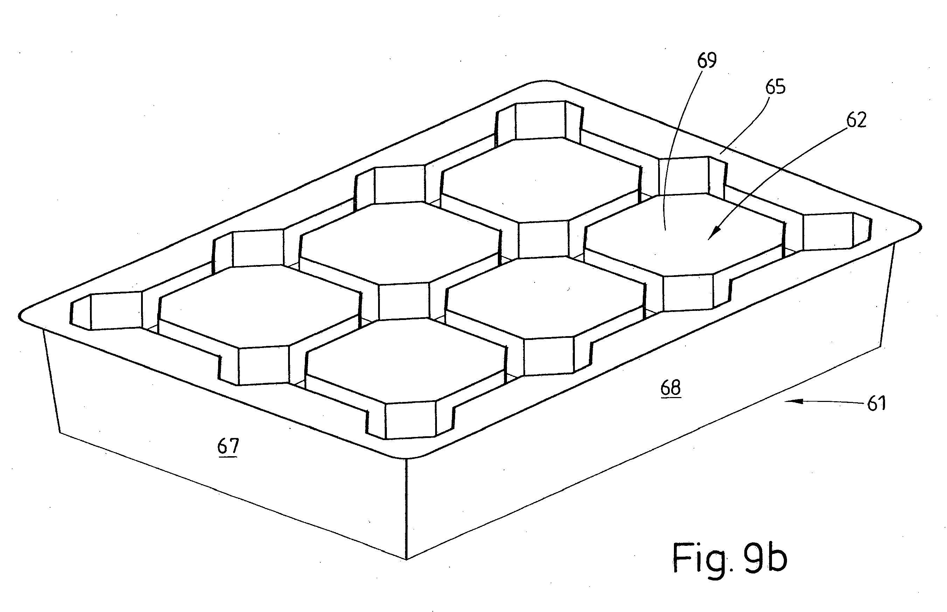

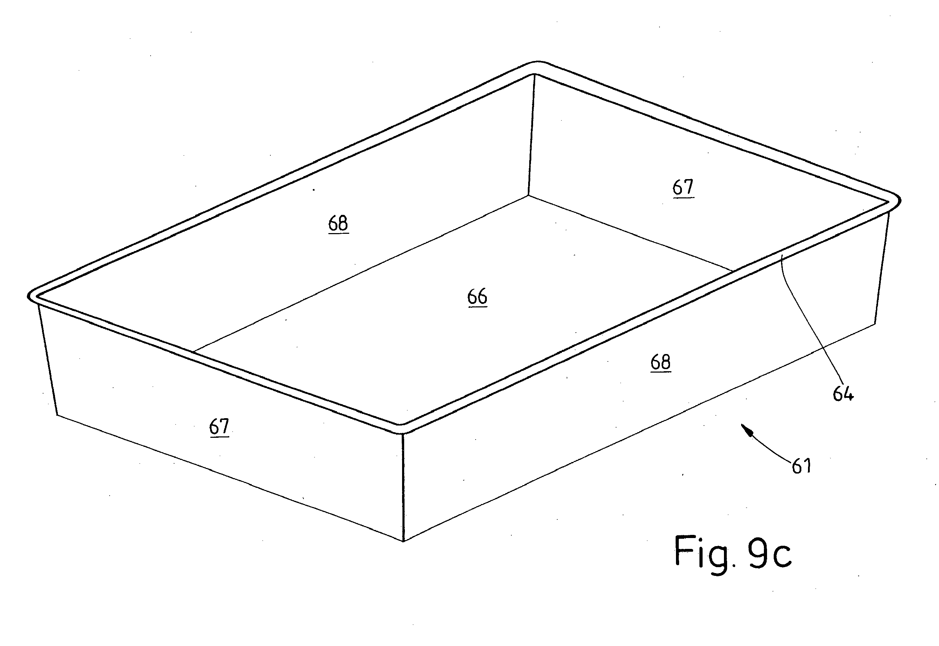

Gemäß Fig. 9a ist in die im Wesentlichen quaderförmige, flache und oben offene Feuerwanne 61 das Bodenteil 62 eingelegt. Ein oberer umlaufender Randstreifen 64 (siehe Fig. 9c) ist dabei abgedeckt durch einen umlaufenden Randstreifen 65 des Bodenteils 62. Die Randstreifen 64, 65 liegen aufeinander. Auf dem Bodenteil 62 liegt der Rost 63 und erstreckt sich dabei bis auf oder sogar über den umlaufenden Randstreifen 65. Gegenüber Fig. 9a fehlt in Fig. 9b nur der Rost 63.

Fig. 9c zeigt die Feuerwanne 61 allein. Erkennbar sind Bodenwand 66, Stirnwände 67 und lange Seitenwände 68 sowie der umlaufende Randstreifen 64, welcher sich im Wesentlichen in einer Ebene parallel zur Bodenwand 66 erstreckt und nach außen gerichtet ist. Die Stirnwände 67 und Seitenwände 68 sind leicht schräg gerichtet, so dass der Querschnitt der Feuerwanne 61 im Bereich des umlaufenden Randstreifens 64 etwas größer ist als unmittelbar über der Bodenwand 66. Insgesamt ermöglicht die beschriebene Gestalt der Feuerwanne 61 eine einfache Herstellung durch Pressen oder Formen mit anschließendem Entnehmen aus einer Form.

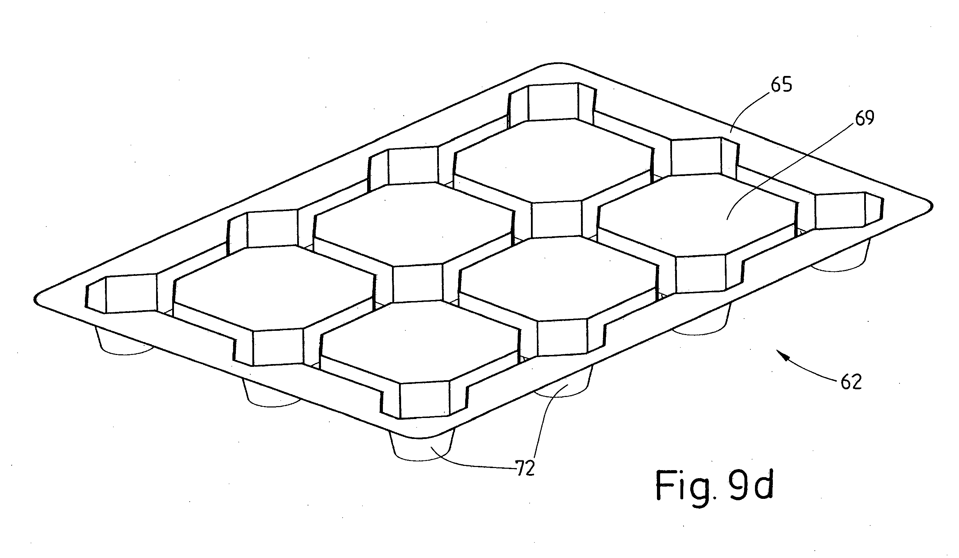

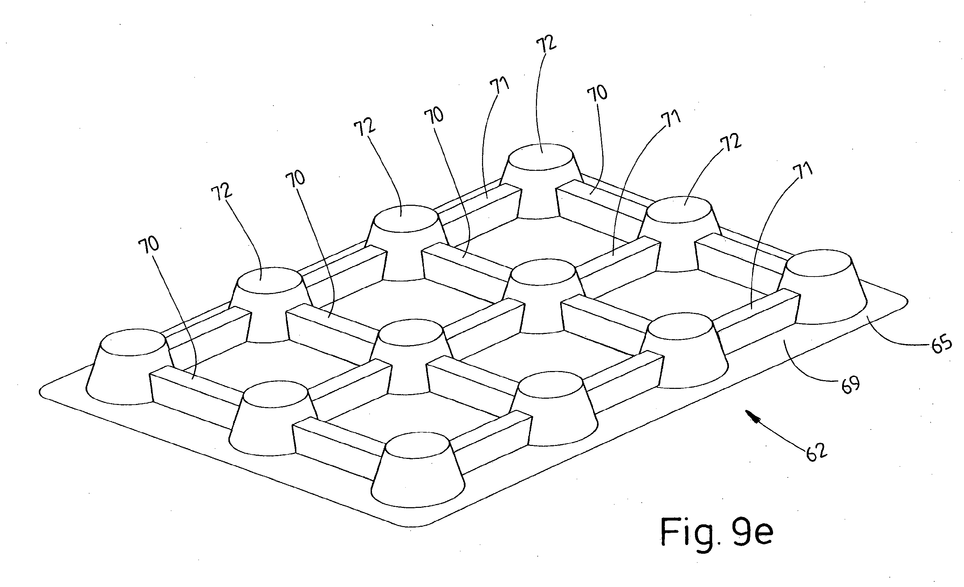

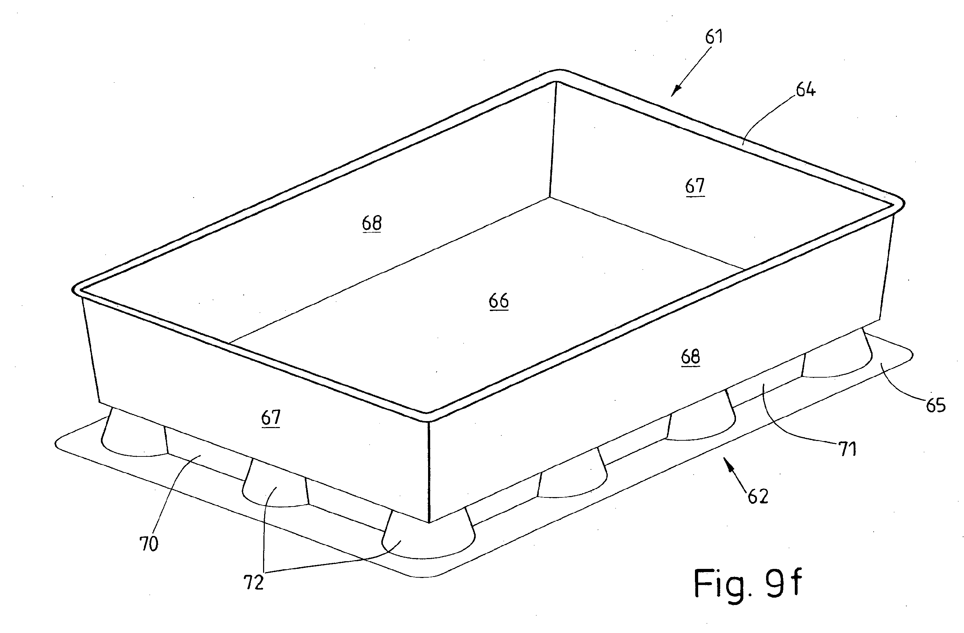

Fig. 9d zeigt das Bodenteil 62 in derselben Ansicht wie in den Fig. 9a und 9b. Konkret handelt es sich um eine Unteransicht. Für die Verwendung des Grills 16 ist das Bodenteil 62 umzudrehen in die Position gemäß Fig. 9e. Diese Lage bzw. Ausrichtung entspricht auch der Darstellung in den Fig. 9f und 9g.

Das Bodenteil 62 weist eine flache Hauptwand 69 auf, die in der Ansicht gemäß Fig. 9e unterbrochen ist durch längs- und quergerichtete, barrenförmige Erhöhungen 70, 71, welche einander kreuzen.

Die Hauptwand 69 geht randseitig in den genannten umlaufenden Randstreifen 65 nahtlos über. Randseitige Erhöhungen 70, 71 verlaufen parallel zum Randstreifen 65.

Im Bereich von Kreuzungspunkten der Erhöhungen 70, 71 sind demgegenüber nochmals erhöhte Bereiche vorgesehen, welche hier nach Art umgedrehter Töpfe 72 ausgebildet sind. Deren geschlossene Böden liegen in der Darstellung der Fig. 9e oben und weisen zur Hauptwand 69 einen größeren Abstand auf als Oberseiten der Erhöhungen 70, 71. Die Bodenwand 66 der Feuerwanne 61 liegt auf den Töpfen 72 auf (siehe Fig. 9f und 9g), ohne die Erhöhungen 70, 71 zu berühren.

Töpfe 72 und Erhöhungen 70, 71 sind nicht massiv ausgebildet, sondern hohl und einseitig offen aus der Hauptwand 69 herausgeformt, so dass sämtliche Bestandteile des Bodenteils 62 im Wesentlichen die gleiche Wandstärke aufweisen. Wandungen der Töpfe 72 und Erhöhungen 70, 71 sind leicht schräg gerichtet, um die Herstellung durch Pressen bzw. Formen sowie ein leichtes Entnehmen aus der Form zu ermöglichen.

In der Feuerwanne 61 werden vorzugsweise Grill-Briketts verbrannt. Die dabei entstehende Hitze darf keine Brandgefahr für den Untergrund darstellen. Das Bodenteil 62 erfüllt in diesem Zusammenhang mehrere Funktionen. Zum einen wird der Abstand zum Untergrund vergrößert. Zum anderen wird die von der Feuerwanne 61 ausgehende Wärmestrahlung abgeblockt. Durch die geschlossene Ausführung des Bodenteils 62 erreicht die Wärmestrahlung an keiner Stelle den Untergrund. Außerdem gewährleistet die unterschiedliche Höhe der Töpfe 72 und Erhöhungen 70 ,71 eine Belüftung des Zwischenraums zwischen Feuerwanne 61 und Bodenteil 62, so dass dort kein Wärmestau entsteht.

Gemäß Fig. 9g liegt der Rost 63 bei Gebrauch des Grills 60 auf dem umlaufenden Randstreifen 64 der Feuerwanne 61 auf. Nicht gezeigte Haltemittel am Rost 63 greifen nach unten um den umlaufenden Randstreifen 64 herum. Ein einfaches Abheben des Rostes 63 ist damit nicht möglich. Vorzugsweise sind die genannten Haltemittel nur entlang der Seitenwände 68 vorgesehen, so dass der Rost 63 in Richtung des Pfeils 73 auf den Randstreifen 64 aufschiebbar ist.

Feuerwanne 61 und Bodenteil 62 sind aus denselbem Werkstoff hergestellt, bestehend aus pflanzlichen Bestandteilen und natürlichen, hitzebeständigen Füllstoffen und Bindemitteln. Die Bindemittel können zugleich Füllstoffe sein. Sämtliche Bestandteile sind so ausgewählt, dass Feuerwanne und Bodenteil nach Gebrauch verrottbar oder biologisch abbaubar sind oder in den Biomüll gegeben werden können oder kompostierbar sind. Dabei kann es sich auch um anorganische Substanzen handeln, etwa Mineralien, Steinmehl oder erdige Bestandteile oder um mit Metallen gebildete Mineralien. Wichtig ist eine gute Herstellbarkeit durch Verpressen oder sogar Sintern.

Der Rost ist bei dieser Ausführungsform aus Metall hergestellt, nämlich mit einem etwas dickeren umlaufenden Draht 74, welcher einen Rahmen bildet, und einander kreuzenden dünneren Drähten 75 zum Auflegen des nicht gezeigten Grillgutes. Kreuzungsstellen der Drähte einerseits und/oder Berührungspunkte der Drähte 75 mit dem Draht 74 können verbunden, insbesondere verlötet sein.

**Bezugszeichenliste:**

| | | | |
|---|---|---|---|
| 10 | Einweggrill | 43 | Schnitte |
| 11 | Feuerwanne | 44 | Schnitte |
| 12 | Bodenteil | 45 | Faltlinien |
| 13 | Bodenwand | 46 | Faltlinien |
| 14 | Seitenwand | 47 | Schnitte |
| 15 | Seitenwand | 48 | Schnitte |
| 16 | Stirnwand | 49 | Vorsprünge |
| 17 | Stirnwand | 50 | Faltlinie |
| 18 | Sicken | 51 | Faltlinie |
| 19 | Sicken | 52 | Schnitte |
| 20 | Zuschnitt | 53 | Einschnitte |
| 21 | Stützmittel | 54 | Einschnitte |
| 22 | Stützmittel | 55 | Faltlinien |
| 23 | Unterwand | 56 | Faltlinien |
| 24 | Seitenwand | 57 | Randelemente |
| 25 | Seitenwand | 58 | Randelemente |
| 26 | Stirnwand | 60 | Grill |
| 27 | Stirnwand | 61 | Feuerwanne |
| 28 | Bodenelement | 62 | Bodenteil |
| 29 | Seitenelement | 63 | Rost |
| 30 | Seitenelement | 64 | umlaufender Randstreifen |
| 31 | Stirnelement | 65 | umlaufender Randstreifen |
| 32 | Stirnelement | 66 | Bodenwand |
| 33 | Seitenfaltelement | 67 | Stirnwände |
| 34 | Seitenfaltelement | 68 | Seitenwände |
| 35 | Stirnfaltelement | 69 | Hauptwand |
| 36 | Stirnfaltelement | 70 | Erhöhungen |
| 37 | Lappenelemente | 71 | Erhöhungen |
| 38 | Lappenelemente | 72 | Töpfe |
| 39 | Faltlinie | 73 | Pfeil |
| 40 | Faltlinie | 74 | Draht |
| 41 | Faltlinie | 75 | Drähte |
| 42 | Faltlinie | | |

## Patentansprüche

1. Grill, insbesondere Einweggrill, mit einer Feuerwanne (11, 61) aus hitzebeständigem Werkstoff, **dadurch gekennzeichnet, dass** der Werkstoff der Feuerwanne (11, 61) pflanzliche Bestandteile sowie natürliche hitzebeständige Füllstoffe und/oder Bindemittel enthält.

2. Grill nach Anspruch 1, **dadurch gekennzeichnet, dass** als pflanzliche Bestandteile zumindest teilweise oder ausschließlich pflanzliche Fasern vorgesehen sind und/oder als Füllstoffe und/oder Bindemittel anorganische Substanzen vorgesehen sind, insbesondere kompostierbare Substanzen.

3. Grill nach Anspruch 1 oder 2, **dadurch gekennzeichnet, dass** die Bestandteile des Werkstoffs der Feuerwanne (11, 61) miteinander verpresst sind.

4. Grill mit Feuerwanne, insbesondere nach einem der voranstehenden Ansprüche, **gekennzeichnet durch** einen Rost (63) aus Metall und/oder hitzebeständigem, natürlichem Werkstoff, vorzugsweise hitzebeständigem Hartholz und/oder organischem Material.

5. Grill nach Anspruch 4, **dadurch gekennzeichnet, dass** der Rost (63) lösbar mit der Feuerwanne verbunden ist.

6. Grill mit Feuerwanne, insbesondere nach einem der voranstehenden Ansprüche, **gekennzeichnet durch** ein Bodenteil (12, 62), auf dem sich die Feuerwanne abstützt.

7. Grill nach Anspruch 6, **dadurch gekennzeichnet, dass** ein Boden (13, 66) der Feuerwanne mit Abstand zur tiefsten Wandung des Bodenteils gehalten ist.

8. Grill nach Anspruch 6 oder 7, **dadurch gekennzeichnet, dass** das Bodenteil (12) verrottbar und/oder biologisch abbaubar ist, vorzugsweise aus zellulosehaltigem Werkstoff, insbesondere aus Pappe, und/oder aus einem natürlichen Werkstoff hergestellt ist.

9. Grill nach Anspruch 6 oder einem der weiteren Ansprüche, **dadurch gekennzeichnet, dass** das Bodenteil (12, 62) Stützmittel für die Feuerwanne aufweist, die bevorzugt durch Faltung aus Wandungen des Bodenteils (12) gebildet sind.

10. Grill nach Anspruch 6 oder einem der weiteren Ansprüche, **dadurch gekennzeichnet, dass** das Bodenteil (12, 62) zugleich als Deckel für die Feuerwanne (11, 61) ist.

11. Grill nach Anspruch 6 oder einem der weiteren Ansprüche, **dadurch gekennzeichnet, dass** der Werkstoff des Bodenteils (12, 62) pflanzliche Bestandteile sowie natürliche hitzebeständige Füllstoffe und/oder Bindemittel enthält.

12. Grill nach Anspruch 6 oder einem der weiteren Ansprüche, **dadurch gekennzeichnet, dass** das Bodenteil (62) eine Hauptwand (69) aufweist, welche etwa parallel zur Ebene des Rostes (63) und/oder zu einer Bodenwand (13, 66) der Feuerwanne (11, 61) verläuft, und dass in der Hauptwand (69) Vertiefungen und/oder Erhöhungen (70, 71) gebildet sind, insbesondere derart, dass das Bodenteil (62) im Bereich der Vertiefungen und/oder Erhöhungen (70, 71) etwa die gleiche Wandstärke aufweist wie im Bereich der Hauptwand (69) im Übrigen.

13. Grill nach Anspruch 12, **dadurch gekennzeichnet, dass** die Erhöhungen (70, 71) und/oder Vertiefungen als streifen- oder grabenartige Bereiche in der Hauptwand (69) ausgebildet sind, insbesondere als einander kreuzende Bereiche, oder die Erhöhungen und/oder Vertiefungen als säulen- oder topfartige Bereiche (72) in der Hauptwand (69) ausgebildet sind, insbesondere nahe einem Rand der Hauptwand (69), umlaufend und mit Abstand zueinander, und vorzugsweise in Kreuzungsbereichen von streifen- oder barrenartigen Bereichen.

14. Grill nach Anspruch 13 oder einem der weiteren Ansprüche, **dadurch gekennzeichnet, dass** mehrere der säulen- oder topfartigen Erhöhungen (72), vorzugsweise alle, erhabener sind als die streifen- oder barrenartigen Bereiche.

15. Grill nach Anspruch 1 oder einem der weiteren Ansprüche, **dadurch gekennzeichnet, dass** die Feuerwanne (11, 61) und/oder ein Bodenteil (12, 62) einen ganz oder teilweise umlaufenden Rand (64, 65) aufweisen, insbesondere einen in einer im Wesentlichen waagerechten Ebene nach außen abstehenden Rand.

16. Grill nach Anspruch 4 oder einem der weiteren Ansprüche, **dadurch gekennzeichnet, dass** der Rost (63) und die Feuerwanne (61) Mittel zur mindestens in einer Richtung wirksamen, formschlüssigen Verbindung aufweisen, insbesondere randseitige Verbindungsmittel am Rost (63), welche den Rand (64) der Feuerwanne (61) umgreifen.
